# NOUVEAU FASCICULE DE BREVET EUROPEEN

(11) **EP 1 116 432 B2**
(45) Date de publication et mention de la décision concernant l'opposition: **12.01.2005**
(45) Mention de la délivrance du brevet: 29.05.2002
(21) Numéro de dépôt: 00430002.6
(22) Date de dépôt: 13.01.2000
(51) Int. Cl.: A01D 46/26

(54) **Appareil portable pour la récolte de petits fruits tels que, par exemple, olives, amandes, cerises du caféier**
Tragbares Gerät zum Ernten von Kleinfrüchten wie Oliven, Mandeln, Kaffeekirschen
Portable apparatus for the harvesting of small fruits such as olives, almonds, coffee berries

(43) Date de publication de la demande: 18.07.2001
(73) Titulaire: PELLENC (Société Anonyme), 84120 Pertuis (FR)
(72) Inventeur: Pellenc, Roger, 84120 Pertuis (FR)
(74) Mandataire: Nuss, Pierre

(56) Documents cités:
- EP-A- 0 427 170
- DE-A- 3 507 545
- DE-B- 1 257 476
- FR-A- 1 487 253
- FR-A- 2 168 043
- FR-A- 2 327 719
- US-A- 3 389 543
- US-A- 3 651 627
- US-A- 4 611 461
- US-A- 5 099 637
- DATABASE WPI Section PQ, Week 198635 Derwent Publications Ltd., London, GB; Class P12, AN 1986-230936 XP002134576 & SU 1 205 811 A (UKR HORTICULTURE IN), 23 janvier 1986 (1986-01-23)

## Description

La présente invention concerne un appareil portable pour la récolte de petits fruits tels que, par exemple, olives, amandes, cerises du caféier, mirabelles, et autres.

Plus exactement, l'invention concerne un appareil de récolte portable du genre de celui décrit dans le document DE 3 507 545. En particulier, l'appareil objet de ce document DE 3 507 545 présente les caractéristiques du préambule de la revendication 1. Mais l'appareil selon DE 3 507 545 présente un certain nombre d'inconvénients du fait notamment qu'il ne permet pas un transfert d'énergie optimal entre la motorisation et les petits fruits à récolter.

Un objet de l'invention est de remédier aux inconvénients et insuffisances des appareils de récolte connus du type susmentionné, et plus généralement, aux inconvénients et insuffisances des différents appareils portatifs de récolte présentement proposés sur le marché.

Selon une première disposition caractéristique, l'invention est constituée par un appareil de récolte du genre précité dont la motorisation comprend un motoreducteur commandé par une poignée de commande et disposé sur ou à proximité de l'extrémité proximale de ladite perche, ladite motorisation entraînant, d'une part, une tige de transmission rotative coaxiale traversant ladite perche et, d'autre part, le dispositif de transmission de mouvement qui transforme le mouvement de rotation de ladite tige de transmission rotative en ledit mouvement de basculement circulaire alternatif dudit support de doigts, lesdits doigts mobiles étant constitués par des tiges réalisées par pultrusion en fibres de carbone ou de verre montées dans le support de doigts réalisé sous forme d'un tube cylindrique creux et formant avec le support de doigts un peigne mobile.
Un tel appareil de récolte résout en particulier le problème du transfert d'énergie jusqu'aux fruits à récolter et minimise toute déperdition d'énergie.

Grâce à ce mouvement de va-et-vient oscillatoire particulier du peigne, les branches fruitière des arbres sont prises entre les doigts de celui-ci et sont secouées dans des conditions permettant de détacher la totalité ou quasi totalité des fruits portés par ces branches, y compris lors de la récolte de variétés très difficiles à faire tomber. En outre, ce mouvement ne "pêle" pas les branches et ne provoque pas l'arrachement des bourgeons à fruits.

Le mouvement circulaire alternatif du peigne de secouage favorise la pénétration de la tête de récolte dans la végétation.

D'autre part, les doigts ont une "raideur" adéquate déterminée pour ne pas blesser la végétation et pour amortir les vibrations transmises à l'opérateur par l'intermédiaire de la perche. D'autre part, les doigts ont un mouvement de "rabatteur" progressivement plus important en s'éloignant de l'axe de rotation, l'extrémité distale des doigts ayant en effet une trajectoire plus importante que celle de leur extrémité proximale. Cette grande amplitude des doigts (supérieure à 100 mm) aux extrémités, a pour effet d'acccroître l'efficacité de l'action de la tête de récolte.

Selon une autre disposition caractéristique, le peigne mobile comporte des doigts orientés dans au moins deux plans différents sécants, par exemple suivant l'axe longitudinal du support de doigts du peigne.

Selon une autre disposition caractéristique, l'appareil selon l'invention comprend des moyens permettant de modifier l'orientation des doigts du peigne par rapport à l'axe de la perche.

Grâce à cette disposition, il est possible :
- de régler l'orientation des doigts par rapport à la perche, en fonction de la hauteur des branches à secouer, afin de faciliter la pénétration desdits doigts dans la frondaison ;
- de régler l'amplitude du mouvement des doigts, lorsque le peigne est monté avec une aptitude de basculement alternatif.

Selon une caractéristique essentielle, l'appareil de récolte comprend un moto-réducteur électrique disposé dans l'extrémité proximale de la perche dudit appareil, ou installé à proximité de ladite extrémité, une tige de transmission rotative traversant la perche de celui-ci et un dispositif de transformation de mouvement installé à l'extrémité distale de ladite perche et permettant de transformer le mouvement de rotation de la tige de transmission rotative en un mouvement de va et vient du support de doigts du peigne mobile accouplé audit dispositif.

Selon une autre disposition caractéristique, l'appareil selon l'invention comprend une carte électronique de commande disposée sur le circuit d'alimentation du moteur, cette carte électronique étant configurée de façon à assurer le pilotage progressif de la vitesse de rotation du moteur, en fonction de la position de la gâchette équipant la poignée de commande de l'appareil.

Grâce à cette disposition, il est possible de modifier aisément la fréquence des vibrations pour l'adapter à la nature des fruits ou aux variétés à récolter, ou à la situation des branches à secouer.

L'appareil selon l'invention est simple et très léger, sa tête de récolte pénètre très facilement dans la frondaison ; il ne crée que peu de contre-réaction en cours de travail, de sorte que ce travail n'est pas pénible. Sa consommation d'énergie est faible et son rendement très remarquable. On a par exemple constaté qu'il permet de multiplier par 9 ou 10, la quantité de fruits récoltés dans un laps de temps déterminé, par rapport aux quantités récoltées à l'aide de peignes à main, dans le même temps.

Les buts, caractéristiques et avantages ci-dessus et d'autres encore, ressortiront mieux de la description qui suit et des dessins annexés dans lesquels :

La figure 1 est une vue illustrant un appareil de récolte portatif selon l'invention, prêt à être utilisé par un opérateur.

La figure 2A est une vue schématique en perspective et avec arrachements partiels, illustrant un premier exemple de mise en oeuvre du mouvement de va-et-vient du peigne qui, dans ce cas, est un mouvement de basculement alternatif autour d'un axe perpendiculaire à l'axe du support des doigts dudit peigne et coupant ledit axe du support de doigts, le peigne étant représenté dans une position basculée par rapport à l'axe de la perche.

La figure 2B est une vue analogue à la figure 2A et montrant le basculement du peigne dans la direction opposée.

La figure 3 est une vue éclatée montrant les moyens de fixation du peigne et des doigts de celui-ci.

La figure 4 est une vue de côté, avec coupes partielles, de ce peigne.

La figure 5 est une vue de détail et à plus grande échelle de la figure 5, illustrant la fixation des doigts sur le support de doigts du peigne.

La figure 6 est une vue en élévation avec coupe longitudinale et arrachements partiels, illustrant un premier mode d'exécution de l'appareil de récolte portable selon l'invention dont la motorisation est constituée par un moto-réducteur électrique et dont le peigne est animé d'un mouvement de basculement alternatif au moyen du dispositif illustré aux figures 2A et 2B.

La figure 7 est une vue en perspective d'une autre variante d'exécution de l'appareil selon laquelle le moteur n'est pas fixé sur la perche mais placé à distance de celle-ci et relié au dispositif de transformation de mouvement par l'intermédiaire d'un flexible.

On se réfère auxdits dessins pour décrire des exemples de réalisation intéressants, bien que nullement limitatifs, de l'appareil de récolte portable selon l'invention.

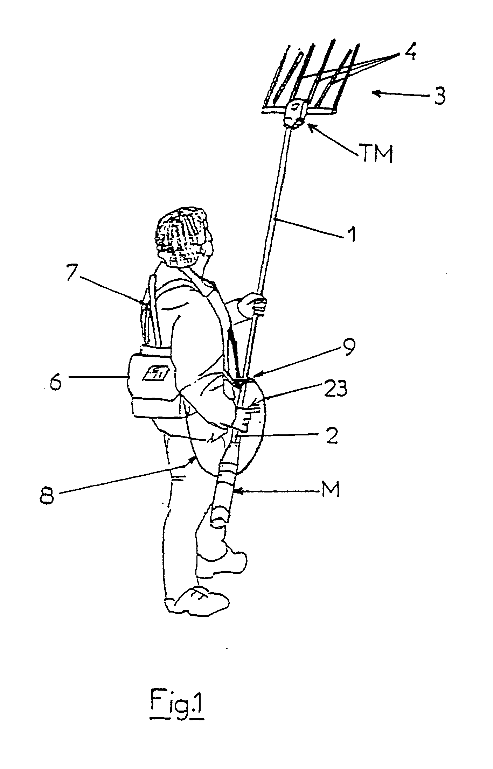

Comme le montre la figure 1, cet appareil de récolte portable est du genre comportant une perche 1 pourvue d'une poignée de commande 2 à proximité de son extrémité inférieure ou extrémité proximale et dont l'extrémité supérieure ou extrémité distale est munie d'une tête de récolte 3 comprenant une pluralité de doigts mobiles 4 ; une motorisation M permet de mouvoir l'ensemble desdits doigts. Suivant l'exemple illustré, cette motorisation est constituée par un moto-réducteur électrique, de sorte que l'appareil comprend également un générateur de courant électrique qui peut être constitué par un ensemble de batteries logées dans un sac 6 muni d'un harnais 7 permettant la suspension de ce sac dans le dos de l'opérateur, l'ensemble de batteries étant relié au moto-réducteur par un câble d'alimentation 8. De préférence, la perche 1 et le harnais 7 sont pourvus de moyens complémentaires de liaison 9 tels qu'anneau et mousqueton. L'ensemble de batteries pourrait, alternativement, être installé sur un chariot ou sur un traineau. D'autre part et comme exposé ci-après, la motorisation de l'appareil peut être constituée par un moteurthermique.

Selon une disposition de l'invention, la tête de récolte 3 comprend un peigne mobile constitué d'un support de doigts 10 et d'une pluralité de doigts 4 fixés sur celui-ci, ce support de doigts 10 étant monté avec une aptitude de mouvement de va-et-vient ou mouvement alternatif dans un plan contenant ledit support considéré suivant sa longueur L, et étant accouplé à des moyens d'entraînement permettant de lui communiquer ce mouvement, ces moyens comprenant la motorisation M et un système de transmission et de transformation de mouvement désigné dans son ensemble par la référence TM.

De manière avantageuse, le support de doigts 10 est constitué par un tube cylindrique.

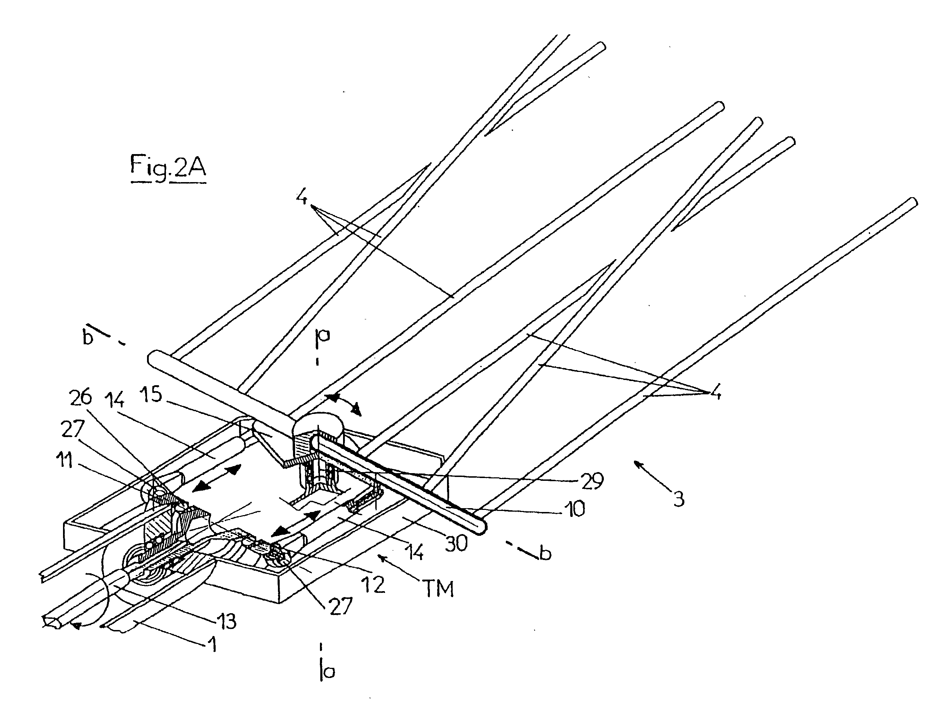

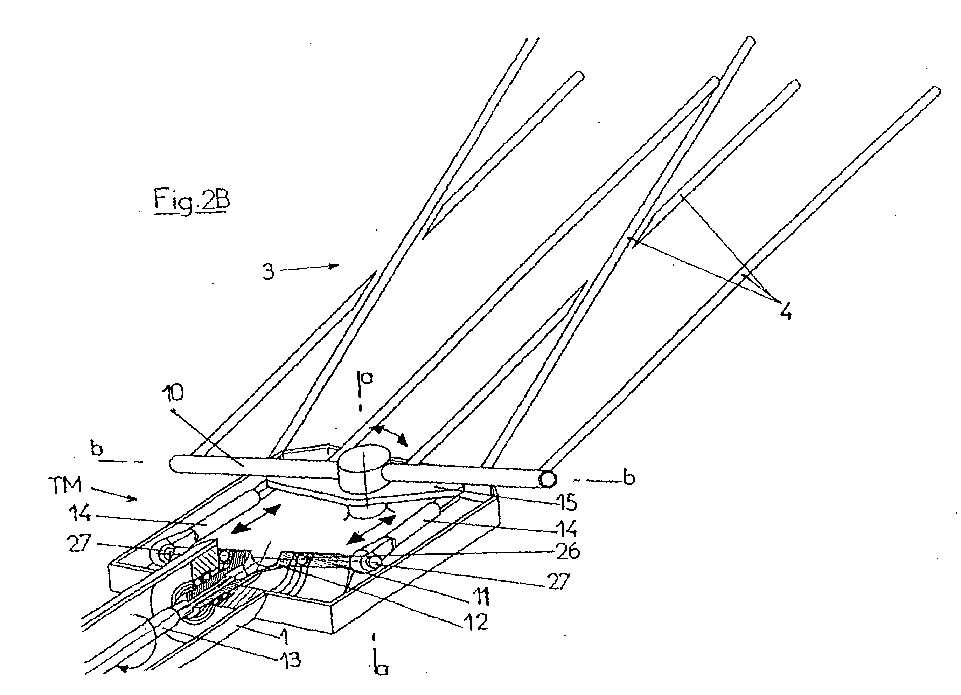

Selon un exemple de réalisation illustré aux figures 2A et 2B, le support de doigts 10 du peigne mobile 3 est monté avec une aptitude de basculement alternatif autour d'un axe de rotation a-a perpendiculaire à l'axe longitudinal b-b dudit support de doigts et coupant ledit axe b-b de ce dernier.

Ce mouvement peut être obtenu à l'aide de différents mécanismes connus de transmission de puissance avec transformation du mouvement circulaire continu en un mouvement angulaire alternatif.

Suivant l'exemple représenté, ce mécanisme TM comprend un plateau oscillant 11 monté, par l'intermédiaire d'un roulement 26, sur la partie distale inclinée d'un arbre angulaire 12 dont la partie proximale accouplée à l'arbre de transmission 13 de la motorisation ou à l'arbre moteur de celle-ci, est disposée dans le prolongement dudit arbre 13 et dont la partie distale inclinée supporte le plateau oscillant 11. Ce plateau oscillant est reliée à des biellettes réglables 14 fixées, par l'intermédiaire de rotules 27, et de l'une de leurs extrémités, en deux points diamétralement opposés dudit plateau oscillant. Ces biellettes sont, d'autre part, reliées, par l'intermédiaire d'une articulation et de leur extrémité opposée, à un balancier 15 agencé de façon à pouvoir être rigidement relié au peigne 3, ce balancier étant monté pivotant, par l'intermédiaire de sa partie centrale et d'un palier 29, sur un support de palier 30 fixé sur l'extrémité distale de la perche et constitué par une paroi d'un boîtier dans lequel est logé le dispositif de transformation de mouvement.

On comprend que la rotation de l'arbre de transmission 13 entraîne le mouvement de l'arbre angulaire 12, ce mouvement pouvant être décomposé en :
- une rotation autour de l'axe de l'arbre de transmission, non transmise au plateau 11 grâce au roulement 26 ;
- une oscillation angulaire autour d'un axe perpendiculaire au plan contenant l'axe de la perche et l'axe a-a de rotation du peigne, transmise au plateau 11, mais non transmise aux biellettes 14 grâce aux rotules 27 ;
- une oscillation angulaire autour d'un axe perpendiculaire aux deux axes susmentionnés, transmise au plateau 11,
lequel communique des mouvements de sens contraires aux biellettes 14 assurant le mouvement de va-et-vient circulaire du balancier 15 et, par conséquent, également celui du peigne 3.

Selon le mode de réalisation ci-dessus, l'amplitude du mouvement vibratoire des doigts 4 est de l'ordre de +/- 15°, soit 30°, correspondant à une amplitude, en bout des doigts, de l'ordre de 10 cm à 15 cm.

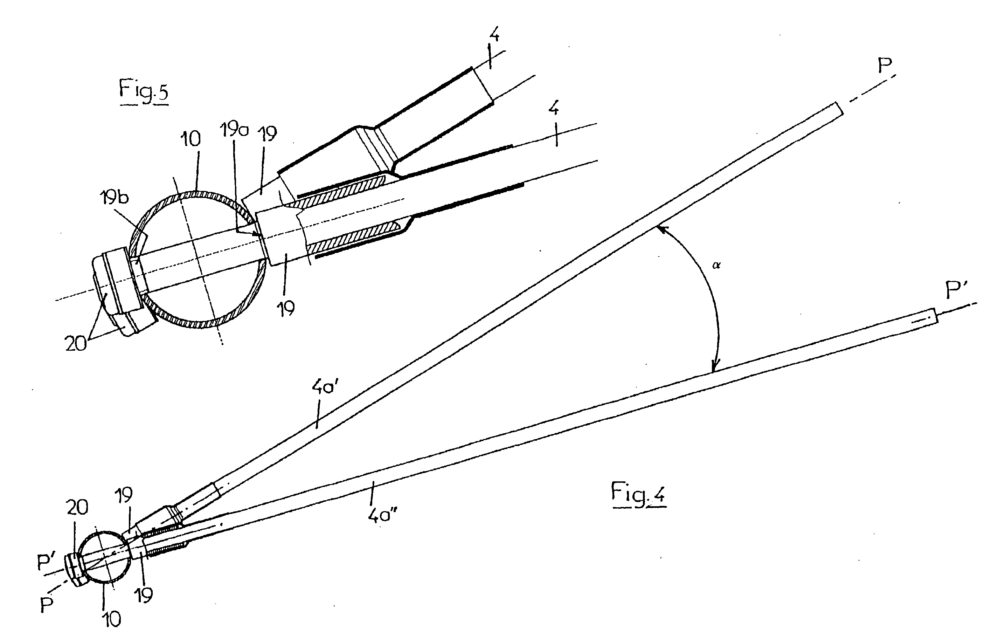

Suivant une autre caractéristique intéressante de l'invention, le peigne 3 de la tête de récolte comporte des doigts 4', 4" s'étendant dans au moins deux plans différents P-P et P'-P'sécants, par exemple suivant l'axe longitudinal b-b du support de doigts 10 (figure 4), ces plans formant, entre eux un angle a, par exemple de l'ordre de 20°.

Cette disposition permet de saisir un important volume de rameaux sans les casser et une meilleure action de secouage des branches fruitières.

Selon une autre disposition caractéristique, les doigts 4, 4', 4" du peigne 3 sont implantés individuellement et de manière amovible sur le support de doigts 10.

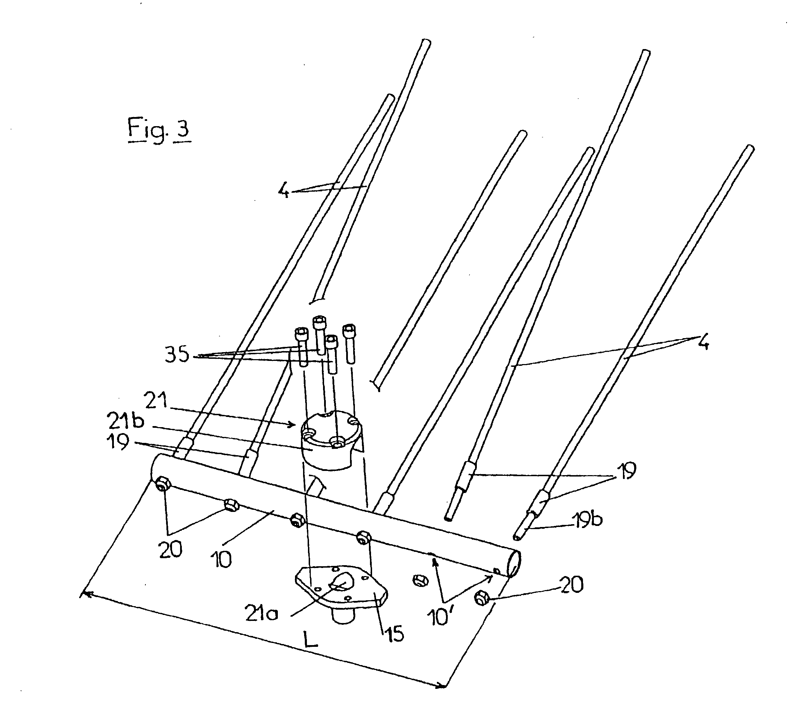

Chaque doigt 4 est, par exemple, fixé par l'intermédiaire de l'une de ses extrémités et par collage, dans une douille de montage 19 traversant l'un des perçages diamétraux 10' dont est pourvu le support de doigts 10, de l'une de ses extrémités à l'autre (figures 3 à 5). Cette douille de montage est munie d'un épaulement circulaire 19a tandis que son extrémité libre est pourvue d'un filetage 19b destiné à recevoir un écrou 20 assurant la fixation et le blocage en position du doigt sur le support de doigts 10 serré entre ledit épaulement et ledit écrou.

Les doigts 4 sont avantageusement constitués par des tiges, pleines ou tubulaires, de section cylindrique ou autre présentant des caractéristiques de largeur, de raideur et de flexibilité élastique étudiées pour éviter que lesdits doigts ne fléchissent et que la déformée ne prenne une forme de "S" accentuée dans la plage de fréquence vibratoire de 0 à 20 Hz.

Ils sont, exécutés en fibres de verre ou en fibres de carbone, par un procédé de pultrusion. De préférence, ils présentent une longueur d'au moins 300 mm, et, par exemple une longueur de 350 mm.

Selon une autre disposition caractéristique très intéressante de l'invention, l'appareil de récolte comporte des moyens permettant de régler l'orientation des doigts 4 du peigne 3, par rapport à l'axe de la perche 1.

Ces moyens comprennent, par exemple, une noix de fixation 21 constituée en au moins deux parties, soit :
- une première partie 21 a rattachée au dispositif de transmission et de transformation de mouvement TM, et,
- une deuxième partie 21b se fixant, par exemple au moyen d'organes de blocage tels que vis 35, sur ladite première partie.

Ces deux parties délimitent, lorsqu'elles sont assemblées, un passage de forme et section correspondant sensiblement à la forme et à la section du support de doigts 10.

Cette noix de fixation 21 est disposée autour du support de doigts 10 qui est serré entre les deux parties de celles-ci, au moyen des vis 35.

On comprend que pour modifier l'orientation des doigts 4 du peigne 3, il suffit de desserrer la noix de fixation 21, de déplacer angulairement le support de doigts 10 en le faisant tourner autour de son axe b-b et de rebloquer ensuite la noix de fixation.

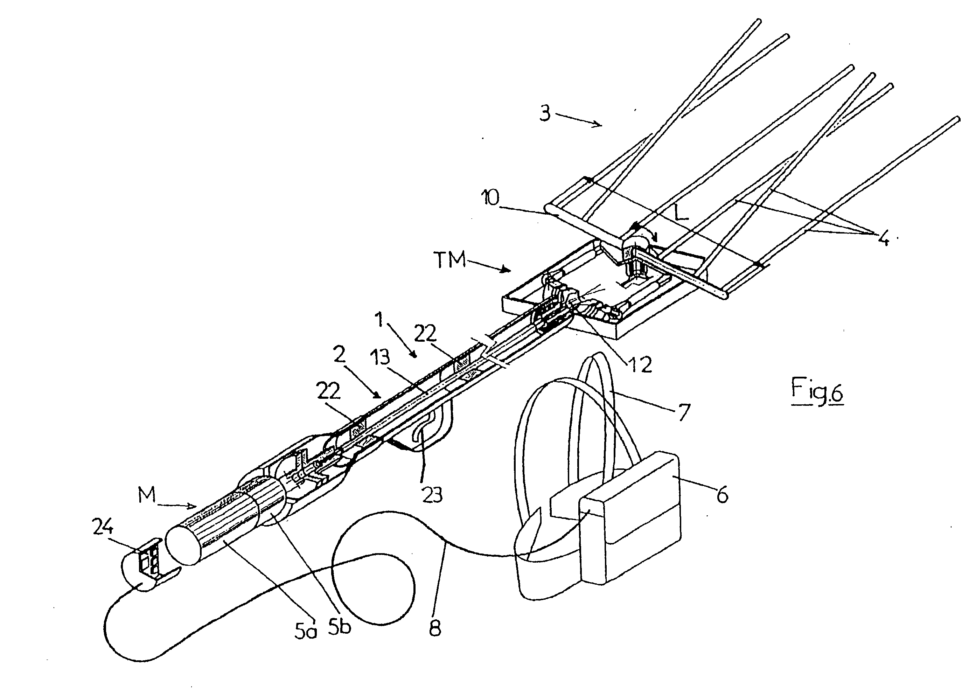

On a représenté, à la figure 6, un exemple de réalisation avantageux suivant lequel la motorisation M de l'appareil comprend un moteur électrique 5a et un réducteur 5b logés dans l'extrémité proximale de la perche 1. Ce mode d'exécution a pour avantages de permettre la mise à disposition d'appareils de récolte portables légers et maniables sans fatigue, un fonctionnement non bruyant et non polluant de ces appareils qui par ailleurs consomment une énergie peu coûteuse. En outre, cet agencement ne génère aucune vibration de la perche, en raison de l'emplacement et de la nature de la motorisation.

Selon l'exemple illustré, l'arbre de sortie du moto-réducteur 5a-5b est relié à l'arbre angulaire 12 du système de transformation de mouvement TM installé à l'extrémité distale de la perche 1 au moyen d'une tige de transmission rotative 13 logée axialement dans ladite perche qui, dans ce cas, est munie, intérieurement, de paliers de guidage 22.

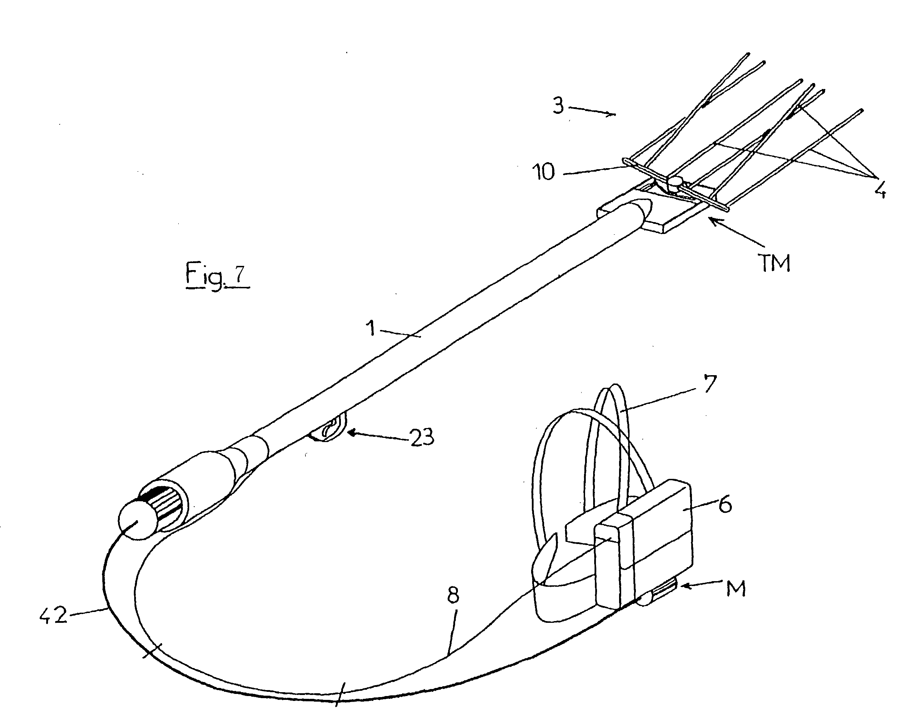

Selon un autre mode d'exécution, on a prévu de relier l'outil de récolte proprement dit 1-3 et sa motorisation M au moyen d'un dispositif d'accouplement souple, de sorte à alléger ledit outil (figure 7). Dans ce cas, la motorisation M peut être placée dans un sac à dos 6, ou installée sur un chariot, ou sur un traîneau et reliée au dispositif de transformation de mouvement au moyen d'un flexible 42.

La perche 1 peut avoir une longueur ajustable en fonction de la hauteur des arbres à récolter.

Dans ce cas, la perche télescopique 1 comprend plusieurs tronçons aptes à s'emboîter les uns dans les autres tandis que la tige de transmission 13 est constituée de plusieurs parties munies d'embouts d'accouplement.

Selon une autre disposition caractéristique de l'invention, l'appareil de récolte comprend des moyens de pilotage de la motorisation M, disposés sur le circuit d'alimentation de cette dernière, de façon à assurer le pilotage progressif de la vitesse de rotation dudit moteur et donc de la fréquence des vibrations, en fonction de la position de la gâchette 23 équipant la poignée de commande 2.

De façon avantageuse, ces moyens peuvent comprendre une carte électronique de commande 24 disposée sur le circuit d'alimentation de la motorisation M et configurée pour assurer le pilotage progressif de la vitesse de cette dernière, en fonction des signaux transmis par un capteur (potentiomètre, capteur à effet Hall, capteur proportionnel ou autre système) contrôlé par la position de la gâchette 23 ou autre organe de commande mobile.

Dans le cas d'appareils équipés d'un moteur électrique 5a, cette carte électronique peut être intégrée soit dans le carter du moteur, soit dans le carter de l'ensemble de batteries 25 qui alimente ledit moteur électrique.

## Revendications

1. Appareil portable pour la récolte de petits fruits tels que, par exemple, olives, amandes, cerises de caféier, comprenant une perche (1) dont l'extrémité distale est munie d'une tête de récolte (3) comprenant une pluralité de doigts mobiles (4) destinés à être insérés dans la frondaison des arbres fruitiers à récolter, et une motorisation (M) permettant de mouvoir l'ensemble des doigts mobiles (4) de façon à secouer la ramure desdits arbres et à provoquer le détachement des fruits, la pluralité de doigts mobiles (4) étant fixée sur un support de doigts (10) accouplé à des moyens d'entraînement (M, TM) comprenant ladite motorisation (M) ainsi qu'un dispositif de transformation de mouvement (TM) installé à l'extrémité distale de ladite perche (1), ces moyens d'entraînement permettant de communiquer audit support de doigts (10) un mouvement de basculement circulaire alternatif autour d'un axe (a-a) perpendiculaire à l'axe (b-b) dudit support de doigts (10), **caractérisé en ce que** ladite motorisation (M) comprend un motoréducteur (5a-5b) commandé par une poignée de commande (2) et disposé sur ou à proximité de l'extrémité proximale de ladite perche (1), ladite motorisation (M) entraînant, d'une part, une tige de transmission rotative (13) coaxiale traversant ladite perche (1) et, d'autre part, le dispositif de transmission de mouvement (TM) qui transforme le mouvement de rotation de ladite tige de transmission rotative (13) en ledit mouvement de basculement circulaire alternatif dudit support de doigts (10), lesdits doigts mobiles (4) étant constitués par des tiges réalisées par pultrusion en fibres de carbone ou de verre montées dans le support de doigts(10) réalisé sous forme d'un tube cylindrique creux et formant avec le support de doigts (10) un peigne mobile.

2. Appareil de récolte portable selon la revendication 1, **caractérisé en ce que** le peigne mobile (3) est monté avec une aptitude de basculement circulaire alternatif autour d'un axe (a-a) perpendiculaire à l'axe (b-b) du support de doigts (10) dudit peigne et coupant ledit axe (b-b).

3. Appareil de récolte portable selon la revendication 1, **caractérisé en ce que** le peigne mobile (3) est monté avec une aptitude de basculement circulaire alternatif autour d'un axe (a'-a') perpendiculaire à l'axe (b-b) dudit support de doigts (10) et distant de ce dernier.

4. Appareil de récolte portable selon l'une quelconque des revendications 1 à 3, **caractérisé en ce que** le peigne mobile (3) comporte des doigts (4'-4") orientés dans au moins deux plans différents (P-P ; P'-P') sécants, de préférence suivant l'axe longitudinal (b-b) du support de doigts (10).

5. Appareil de récolte portable suivant l'une quelconque des revendications 1 à 4, **caractérisé en ce qu'**il comporte des moyens (10-21a-21b) permettant de modifier l'orientation des doigts (4) du peigne (3) par rapport à l'axe de la perche (1).

6. Appareil de récolte portable selon la revendication 5, **caractérisé en ce que** les moyens de réglage de l'orientation des doigts (4) du peigne (3) comprennent une noix de fixation (21) réalisée en deux parties (21a, 21b) assemblées par des moyens de blocage (35) et délimitant un passage traversé par le support de doigts (10) serré entre lesdites parties et qui peut être déplacé angulairement lorsqu'on desserre lesdits moyens de blocage (35).

7. Appareil de récolte portable suivant l'une quelconque des revendications 1 à 6, **caractérisé en ce qu'**il comporte des moyens permettant de régler l'amplitude du mouvement oscillatoire des doigts (4) du peigne (3).

8. Appareil de récolte portable selon l'une quelconque des revendications 1 à 7, **caractérisé en ce que** les doigts (4) sont implantés individuellement et de manière amovible sur le support de doigts (10).

9. Appareil de récolte portable selon la revendication 8, **caractérisé en ce que** les doigts (4) sont fixés dans des douilles de montage (19) comportant un épaulement (19a) et une extrémité filetée (19b), lesdits doigts étant engagés par l'intermédiaire de leur douille de montage (19) dans des perçages diamétraux (10') que comporte le support de doigts (10), leur fixation étant assurée par des écrous vissés sur l'extrémité filetée desdites douilles de montage.

10. Appareil de récolte portable suivant l'une quelconque des revendications 1 à 9, **caractérisé en ce que** l'outil de récolte proprement dit (1-3) et sa motorisation (M) sont reliés au moyen d'un dispositif d'accouplement souple constitué par un flexible (42).

11. Appareil de récolte portable suivant l'une quelconque des revendications 1 à 10, **caractérisé en ce qu'**il comprend des moyens de pilotage de la motorisation (M), disposé sur le circuit d'alimentation de cette dernière, de façon à assurer le pilotage progressif de la vitesse de rotation dudit moteur, et donc de la fréquence des vibrations, en fonction de la position de la gâchette (23) équipant la poignée de commande (2).

12. Appareil de récolte portable selon la revendication 11, **caractérisé en ce que** les moyens de pilotage de la motorisation (M) comprennent une carte électronique de commande (24) disposée sur le circuit d'alimentation de ladite motorisation (M) et configurée pour assurer le pilotage progressif de la vitesse de cette dernière, en fonction des signaux transmis par un capteur contrôlé par la position de la gâchette (23).

## Patentansprüche

1. Tragbares Gerät zum Ernten von Kleinfrüchten wie z. B. Oliven, Mandeln, Kafeekirschen, umfassend eine Stange (1), deren distales Ende mit einem Erntekopf (3) versehen ist, der eine Pluralität mobiler Finger (4) aufweist, die in das Blattwerk der abzuerntenden fruchttragenden Bäume eingeführt werden sollen, und eine Motorisierung (M), mit denen die Gesamtheit der mobilen Finger (4) so bewegt werden kann, dass das Geäst der Bäume geschüttelt werden kann und das Abtrennen der Früchte verursacht, wobei die Pluralität der mobilen Finger (4) an einer Fingerhalterung (10) befestigt ist die mit Antriebsmitteln (M, TM) gekoppelt ist, die die besagte Motorisierung (M) beinhaltet, sowie eine Bewegungsumwandlungsvorrichtung (TM) die am distalen Ende der besagten Stange (1) angeordnet ist, wobei diese Antriebsmittel es ermöglichen der besagten Fingerhalterung (10) eine um eine Achse (a-a), die senkrecht zu einer Achse (b-b) der besagten Fingerhalterung (10) ist, kippende wechselnde Kreisbewegung zu übertragen, **dadurch gekennzeichnet, dass** die besagte Motorisierung (M) einen Getriebemotor (5a, 5b) umfasst der durch einen Bedienhandgriff (2) gesteuert wird und am oder in der Nähe des proximalen Endes der besagten Stange (1) angeordnet ist, wobei die besagte Motorisierung (M) einerseits, eine sich drehende koaxiale Antriebswelle (13) antreibt, die die Stange (1) durchquert und andererseits, die Bewegungsumwandlungsvorrichtung (TM) antreibt, die die drehende Bewegung der besagten sich drehenden Antriebswelle (13) in die besagte kippende, wechselnde Kreisbewegung der besagten Fingerhalterung (10), wobei die besagten beweglichen Finger (4) aus Kohlenstoff-Faser oder Glasfaser bestehende pultrudierte oder durch Zieh-Strangpressen erhaltene Stäben bestehen, die in die Fingerhalterung (10) einmontiert sind, welche als hohles zylinderförmiges Rohr ausgebildet ist und mit der Fingerhalterung (10) einen mobilen Kamm bildet.

2. Tragbares Gerät zum Ernten nach Anspruch 1, **dadurch gekennzeichnet, dass** der bewegliche Kamm (3) in wechselnder Kreisrichtung um eine Achse (a-a) kippbar montiert ist, die zur Achse (b-b) der Fingerhalterung (10) des besagten Kamms senkrecht ist und die Achse (b-b) schneidet.

3. Tragbares Gerät zum Ernten nach Anspruch 1, **dadurch gekennzeichnet, dass** der bewegliche Kamm (3) in wechselnder Kreisrichtung um eine Achse (a'-a') kippbar montiert ist, die zur Achse (b-b) der besagten Fingerhalterung (10) des Kamms senkrecht ist und von letzterer beabstandet ist.

4. Tragbares Gerät zum Ernten nach einem der Ansprüche 1 bis 3, **dadurch gekennzeichnet, dass** der bewegliche Kamm (3) Finger (4', 4") enthält, die in mindestens zwei verschiedenen, vorzugsweise entlang der Längsachse (b-b) der Fingerhalterung (10) sich schneidenden Ebenen (P-P; P'-P') ausgerichtet sind.

5. Tragbares Gerät zum Ernten nach einem der Ansprüche 1 bis 4, **dadurch gekennzeichnet, dass** es Einrichtungen (10-21a-21b) enthält, die eine Änderung der Ausrichtung der Finger (4) des Kamms (3) in Bezug auf die Achse der Stange (1) ermöglichen.

6. Tragbares Gerät zum Ernten nach Anspruch 5, **dadurch gekennzeichnet, dass** die Mittel zum Einstellen der Ausrichtung der Finger (4) des Kamms (3) eine Befestigungsnuss (21) umfassen, die in zwei Teilen (21a, 21b) ausgeführt ist, die durch Verriegelungsmittel (35) verbunden werden und einen Durchgang begrenzen, der von der Fingerhalterung (10) durchquert wird, die zwischen den beiden Teilen eingeklemmt ist und im Winkel verschoben werden kann, wenn die Verriegelungsmittel (35) gelockert werden.

7. Tragbares Gerät zum Ernten nach einem der Ansprüche 1 bis 6, **dadurch gekennzeichnet, dass** es Mittel enthält, mit denen die Amplitude der Schwingbewegung der Finger (4) des Kamms (3) reguliert werden kann.

8. Tragbares Gerät zum Ernten nach einem der Ansprüche 1 bis 7, **dadurch gekennzeichnet, dass** die Finger (4) einzeln und abnehmbar in die Fingerhalterung (10) eingesetzt sind.

9. Tragbares Gerät zum Ernten nach Anspruch 8, **dadurch gekennzeichnet, dass** die Finger (4) in Montagehülsen (19) befestigt sind, die eine Schulter (19a) und ein Gewindeende (19b) enthalten, wobei die Finger mittels ihrer Montagehülse (19) in die diametralen Bohrungen (10') eingesetzt sind, welche die Fingerhalterung (10) aufweist, wobei ihre Befestigung durch Schrauben sichergestellt wird, die in das Gewindeende der Montagehülsen eingeschraubt werden.

10. Tragbares Gerät zum Ernten nach einem der Ansprüche 1 bis 9, **dadurch gekennzeichnet, dass** das eigentliche Erntewerkzeug (1-3) und seine Motorisierung (M) mittels einer flexiblen Kopplungseinrichtung verbunden sind, die aus einem biegsamen Verbindungsstück (42) gebildet wird.

11. Tragbares Gerät zum Ernten nach einem der Ansprüche 1 bis 10, **dadurch gekennzeichnet, dass** es eine Steuereinrichtung für die Motorisierung (M) umfasst, die in deren Speisestromkreis so angeordnet ist, dass eine schrittweise Steuerung der Drehgeschwindigkeit des Motors und damit der Schwingungsfrequenz in Abhängigkeit von der Position des Drückers (23) sichergestellt wird, mit dem der Steuerungshandgriff (2) ausgestattet ist.

12. Tragbares Gerät zum Ernten nach Anspruch 11, **dadurch gekennzeichnet, dass** die Steuereinrichtung der Motorisierung (M) eine elektronische Steuerplatine (24) enthält, die in dem Speisestromkreis der Motorisierung (M) angeordnet und so konfiguriert ist, dass deren schrittweise Steuerung in Abhängigkeit von den Signalen sichergestellt wird, die von einem Signalgeber oder Sensor übermittelt werden, der von der Position des Drückers (23) gesteuert wird.

## Claims

1. Portable apparatus for harvesting small fruits such as, for example, olives, almonds, or berries from the coffee tree, comprising a pole (1), the distal end of which is equipped with a harvesting head (3) comprising a plurality of movable fingers (4) designed to be inserted into the foliage of the trees whose fruit is being harvested, and a motorised unit (M) which enables the fingers to all be moved together so as to shake the boughs of said trees and to cause the fruits to become detached, the plurality of the fingers (4) being fixed to a finger bracket (10) coupled to driving means (M, TM) comprising said motorised unit (M) and a motion converting device (TM) installed at the distal end of said pole (1), these driving means enabling to communicate to said finger bracket (10) a tilting reciprocating circular motion about an axis (a-a) perpendicular to an axis (b-b) of said finger bracket (10), **characterised in that** said motorised unit (M) comprises a geared motor (5a, 5b) controlled by a control handle (2) and arranged at or near to the proximal end of said pole (1), said motorised unit (M) driving, on one side, a coaxial rotary transmission rod (13) which passes through said pole (1) and, on the other side, the motion converting device (TM) which transforms the rotating movement of said transmission rod (13) into said tilting reciprocating circular motion of said finger bracket (10), said movable fingers (4) being realized as rods made by pultrusion of carbon or glass fibers mounted on the finger bracket (10) realized as a cylindrical hollow tube and forming with the finger bracket (10) a movable comb.

2. Portable harvesting apparatus according to claim 1, **characterised in that** the movable comb (3) is mounted in a manner enabling it to be tilted in a reciprocating circular motion about an axis (a-a) perpendicular to the axis (b-b) of the finger bracket (10) of said comb and intersecting said axis (b-b).

3. Portable harvesting apparatus according to claim 1, **characterised in that** the movable comb (3) is mounted in a manner enabling it to be tilted in a reciprocating circular motion about an axis (a'-a') perpendicular to the axis (b-b) of said finger bracket (10) and remote from the latter.

4. Portable harvesting apparatus according to any of claims 1 to 3, **characterised in that** the movable comb (3) has fingers (4', 4") orientated in at least two different intersecting planes (P-P; P'-P'), preferably along the longitudinal axis (b-b) of the finger bracket (10).

5. Portable harvesting apparatus according to any of claims 1 to 4, **characterised in that** it has means (10-21a-21b) enabling the orientation of the fingers (4) of the comb (3) to be altered with respect to the axis of the pole (1).

6. Portable harvesting apparatus according to claim 5, **characterised in that** the means of adjusting the orientation of the fingers (4) of the comb (3) comprise a fixing bosshead (21) made in two parts (21a, 21b) assembled together by locking means (35) and delimiting a passage through which the finger bracket (10) passes, constrained between said parts and displaceable angularly when said locking means (35) are slackened.

7. Portable harvesting apparatus according to any of claims 1 to 6, **characterised in that** it has means enabling the amplitude of the oscillating motion of the fingers (4) of the comb (3) to be adjusted.

8. Portable harvesting apparatus according to any of claims 1 to 7, **characterised in that** the fingers (4) are installed individually and removably on the finger bracket (10).

9. Portable harvesting apparatus according to claim 8, **characterised in that** the fingers (4) are fixed in mounting sockets (19) which have a collar (19a) and a threaded extremity (19b), said fingers being engaged via their mounting socket (19) in diametrical drill-holes (10') incorporated in the finger bracket (10), and their fixing being assured by nuts screwed onto the threaded extremity of said mounting sockets.

10. Portable harvesting apparatus according to any of claims 1 to 9, **characterised in that** the harvesting tool proper (1-3) and its motorised unit (M) are connected by means of a flexible coupling device constituted by a flexible cable (42).

11. Portable harvesting apparatus according to any of claims 1 to 10, **characterised in that** it comprises means of controlling the motorised unit (M), arranged on the latter's feed circuit, in a manner providing progressive control of the speed of rotation of said motor, and hence of the frequency of the vibrations, in response to the position of the trigger (23) with which the control handle (2) is fitted.

12. Portable harvesting apparatus according to claim 11, **characterised in that** the means of controlling the motorised unit (M) comprise an electronic control board (24) arranged on the feed circuit of said motorised unit (M) and configured so as to provide progressive control of the speed thereof, in response to the signals transmitted by a sensor controlled by the position of the trigger (23).
